## Europäisches Patentamt
## European Patent Office
## Office européen des brevets

(19)

(11) Publication number: **0 144 006**
**B1**

(12)

# EUROPEAN PATENT SPECIFICATION

(45) Date of publication of patent specification: **21.06.89**

(51) Int. Cl.⁴: **G 06 K 9/46**

(21) Application number: **84113410.9**

(22) Date of filing: **07.11.84**

(54) **An improved method of character recognition and apparatus therefor.**

(30) Priority: **09.11.83 JP 211374/83**

(43) Date of publication of application:
**12.06.85 Bulletin 85/24**

(45) Publication of the grant of the patent:
**21.06.89 Bulletin 89/25**

(84) Designated Contracting States:
**DE FR GB IT NL SE**

(56) References cited:
**GB-A-2 020 466**
**US-A-3 585 592**
**US-A-4 180 800**
**US-A-4 193 056**

**PATTERN RECOGNITION, vol. 16, no. 5, 1983,
pages 459-467, Pergamon Press Ltd., Oxford,
GB; K. SATO et al.: "Hand-scan OCR with a
one-dimensional image sensor"**

(73) Proprietor: **Sumitomo Electric Industries, Ltd.
1-3 Shimaya 1-chome Konohana-ku
Osaka 554 (JP)**

(72) Inventor: **Satoh, Koji
c/o Sumitomo Electric Ind., Ltd. Osaka Works
1-3, Shimaya 1-chome Konohana-ku Osaka (JP)**

(74) Representative: **Kuhnen, Wacker & Partner
Schneggstrasse 3-5 Postfach 1553
D-8050 Freising (DE)**

Courier Press, Leamington Spa, England.

## Description

This invention relates to an improved method of character recognition wherein a character or figure (hereafter simply referred to as character) is recognized by scanning with an image sensor with a two-dimensional array of photoelectric elements.

With respect to prior art reference is made to Japanese Patent Publication No. 54—16133, US—A—4,180,800 and US—A—4,075,605.

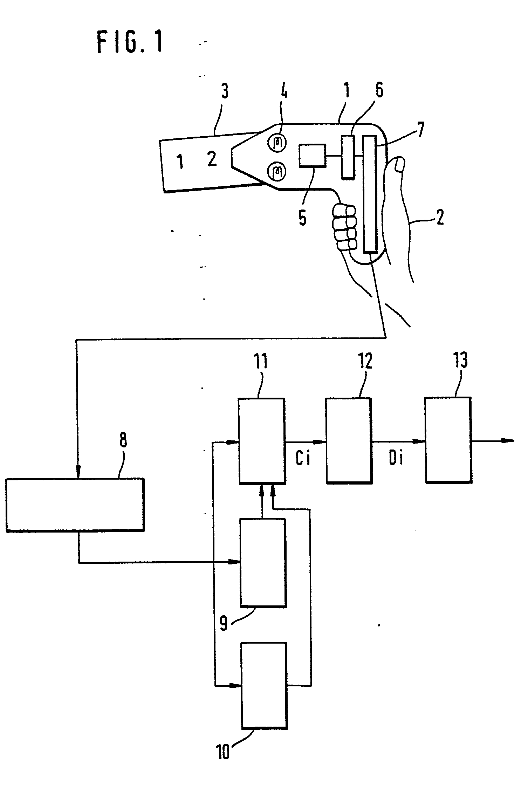

For instance a method of recognizing a character is disclosed in Japanese Patent Publication No. 54—16133 (JP Application No. 52—81181) and this known method will be described below with reference to Fig. 1.

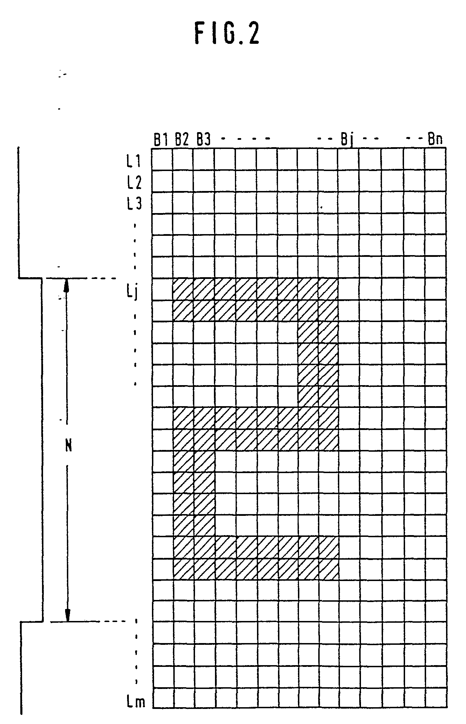

In Fig. 1, characters on a sheet of paper 3 are scanned by a hand-held scanner 1 which is equipped with projection lamps 4, an focusing lens 5, an image sensor 6 with a two-dimensional array of photoelectric elements and a binary circuit 7. If it is desired or necessary, the binary circuit 7 can be located outside of the scanner 1. Reflected light beam from the sheet of paper 3 is focussed on the image sensor 6 through the lens 5 followed by converting the video output signals into digital signals and thus obtaining a binary character pattern, as it is illustrated in Fig. 2.

In order to explain the steps of determining character-areas of the digitalized patter "2" in Fig. 2, reference is made to the notation of the figures 1 and 2. A vertical segmentation circuit 9 and a horizontal segmentation circuit 10 determine the corresponding area of the character "2", respectively. For instance, circuit 9 detects that the character exists from line $L_j$ to line $L_j + N - 1$, and similarly circuit 10 determines that in the columns ranging from $B_l$ to $B_i$ there exists the pattern, eventhough not as a whole, but at least partially when considered about the cells with oblique lines in the figure.

In Fig. 2 the number of columns is ranging from $B_l$ to $B_n$ and the number of lines is ranging from $L_l$ to $L_m$.

A line-feature is extracted in a circuit 11 and after all of the features of the lines have been classified and coded for all of the pattern segments of one character, every line-feature is expressed by a feature-classification code ($C_i$). When some adjacent lines with the same feature-classification code ($C_i$) are appearing, then the ($C_i$)s are represented by one typical code ($D_i$) which is called partial-character-feature code and this is achieved by compressing features of a pattern of a character into a package form. Then discrimination of the pattern by a recognition circuit 13 becomes quite swift and simple, in which a character is determined by tracing the order of occurrence of ($D_i$)s according to the predetermined decision network. (state transition flow diagram).

A problem of the above described conventional method of character recognition is that it allows only a limited number of characters/figures to be read, since the line-feature extracting circuit 11 has restricted number of criterion corresponding to the features of the lines when practical read rate is considered.

For instance, in the prior method, as encountered in the ordinary case, either all numerals written in Font-B, or numerals plus limited number of alphabetical characters both in Font-B can be recognized.

According to the prior method, however, the numeral "8" can not be distinguished from alphabetical character "B" and the character "K" is recognized to be similar to "X". As it becomes apparent from the above instances, conventional hand-held OCR-readers can recognize numerals and about 10 characters of the alphabet.

It might be possible to provide conventional OCR-readers with additional functions that make such a device capable of distinguishing more characters, for instance by extracting more precise character features concerning a line of a character. This alternative, however, results in a higher price of the equipment due to a large amount of increase of the capacity of a ROM in the recognizing circuit 13 and of the other circuits such as 11 and 12.

Furthermore, a hand-scan OCR with a one-dimensional image sensor is described in PATTERN RECOGNITION, vol. 16, No. 5, 1983, pages 459—467, Pergamon Press Ltd., Oxford, GB, by K. Sato et al. Said hand-scanning type OCR, optical character readcer, is applicable to POS terminals, etc. It uses a one-dimensional image sensor for small size and low cost. The method described in said article can overcome the irregularity of the hand-scanning. Said method has two kinds of counters to extract the horizontal line features. One is a black occurrence counter and the other is a front shape counter. Normalizing this data reduces the influence of pattern variation.

The problem underlying the invention is therefore to eliminate the above-described difficulties which are inherent to the conventional method of character recognition.

Solution of this problem is achieved by the features of Claim 1 and Claim 3.

According to the present invention as defined by Claims 1 and 3 an improved method of character recognition and apparatus therefor is provided, in which a function to recognize character-frames is provided additionally and thus it is achieved to recognize more characters/figures than recognizing them by the conventional method.

The subclaims contain preferred embodiments of the present invention.

An improved method of character recognition according to the present invention will be now described in detail by referring to the drawings in which:

Fig. 1 is a block diagram illustrating a character recognition circuit of an ordinary Optical Character Reader (OCR);

Fig. 2 is a diagram showing a binary pattern of "2" within sight of an image sensor with a two-dimensional array of photoelectric elements;

Fig. 3 is a block diagram of the improved method of character recognition according to the present invention;

Fig. 4 is a flow diagram illustrating a chart of transitional states for recognizing frames of an character which constitutes an embodiment of the recognition method as employed in the present invention; and

Fig. 5 shows a block diagram for recognizing left one half-side of a character-frame illustrated in Fig. 4.

The following table is a summary of all reference numerals and the elements assigned to:

1: hand-held scanner
2: hand
3: paper with characters
4: projection lamp
5: focusing lens
6: image sensor
7: binary circuit
8: buffer register
9: vertical segmentation circuit
10: horizontal segmentation circuit
11: line feature extraction circuit
12: partial feature extraction circuit
13: character recognizing circuit
21: left-margin detecting circuit
22: right-margin detecting circuit
23: left side character-frame recognizing circuit
24: right side character-frame recognizing circuit
25: character-frame discrimination circuit
26: character-synthesizing circuit
30: ROM
31: register

In the embodiment to be described with reference to figures 2 to 5, the same reference numerals 1 to 13 are used for the same components, circuitries and for other subjects cited in Fig. 1, which illustrates the prior method.

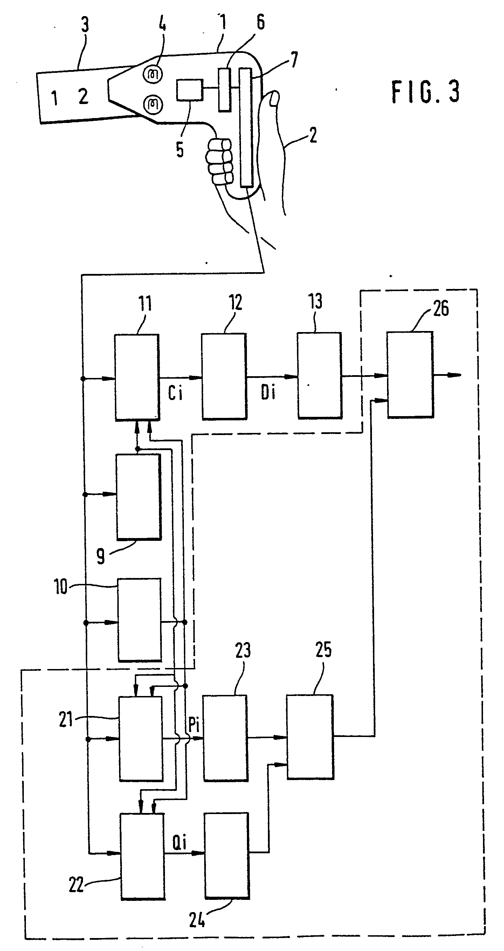

In Fig. 3, reference numeral 21 denotes a left-margin detecting circuit, in which the presence of character pattern is detected for each line segment of the binary pattern. The output signal (Pi) from the circuit 21 implies the specific number of photoelectric element where the left-margin of a character is detected for each line segment of the binary pattern.

In the case of the pattern "2" in Fig. 2, for instance, the left-margin of the pattern segment on the line Lj is found on the photoelectric element in the column numbered B2. Then an output signal for this line Lj is "P2". As the left-margin detecting circuit 21 receives signals concerning the character area which are outputted from the circuit 9 (vertical segmentation circuit) and the circuit 10 (horizontal segmentation circuit), the circuit 21 detects the presence of left-margins of the pattern "2" throughout the lines in the corresponding character area.

A left-side character-frame recognizing circuit 23 recognizes a frame of the pattern on its left-side half using the left-margin signals (Pi)s detected by circuit 21.

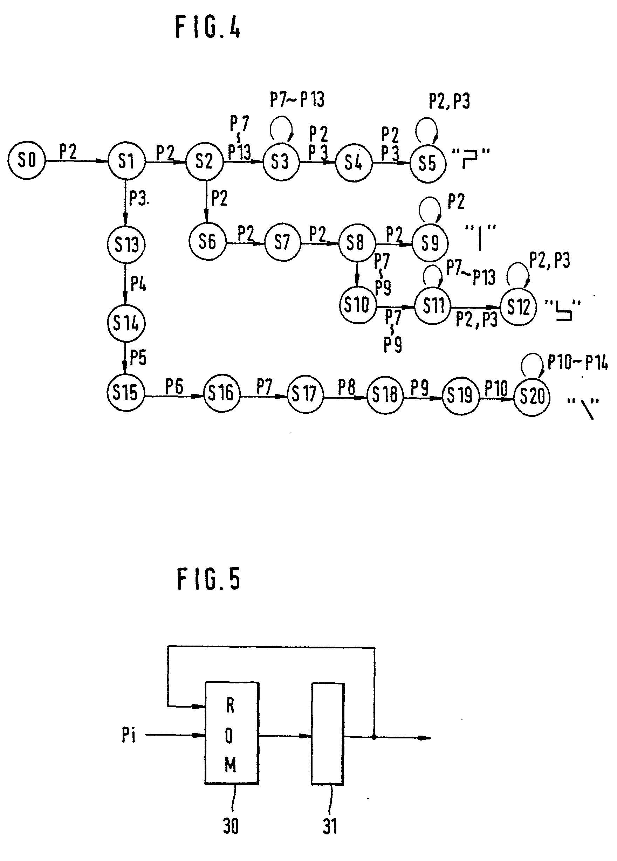

A state of transition flow diagram illustrating the process of recognizing a left side frame of the pattern at circuit 23, which performs its function utilizing a ROM (read only memory), and a register is shown in Fig. 4.

In Fig. 4, S0, S1, ...... are states of transition in the process of recognizing a character-frame and P2, P3, ....... are signal (Pi)s corresponding to the number of photo-cells in which left-margin of the binary pattern exists. For instance, the state of transition is initiated at S0 and P2 is inputted when left-margin is detected in the photocells numbered 2 on the line segment of the two-dimensional array of the photo-cells, and then the state proceeds from S0 to S1. In the same manner, when signal (Pi)s are inputted in a order of P2, P2, P8, P8, P8, P8, P2, ......... P2, then state transition becomes in a order of S0, S1, S2, S3, S4 and finally leads to S5 accordingly. As the final recognition resulting in this state corresponds to a figure such like "コ", the left-frame of the pattern is judged as "コ".

In Fig. 4 there are shown 3 more examples of recognizing a character-frame, i.e. the left-margin of an existing binary pattern. In the second example, for instance, the process will run from S0 to S2 and then to S6 ...... S9. This will occure when the left-margin of a binary pattern is such like "|", for instance in the case of the letter "B".

If the binary pattern is for example "5" the process will run from S0 to S12 via S2 and S8. The result will be a left margin "し".

The last example shown in Fig. 4 is for a left-margin "＼" and in this case the process will run from S0 to S20 via S1.

As already stated, the left-side character-frame recognizing circuit 23 recognizes the frame of the pattern using the left-margin signals (Pi)s detected by circuit 21.

In order to obtain a complete character-frame, right-margin signals (Qi)s are detected by a circuit 22, i.e. with reference to Fig. 2, the output signal for line Lj for the right-side character-frame will become Q9. In a right-side character-frame recognizing circuit 24 the right-margin signals (Qi)s are used to recognize the frame of the pattern on its right-side half. These two halves are combined in a character-frame discrimination circuit 25 to determine the whole frame of a character to be recognized.

Fig. 5 is an example of the circuit 23 for recognizing the above explained pattern-frame. The circuit is composed of a ROM 30 and a register 31. Both signals of the input signal (Pi) and the output signal of the register 31 are introduced to the ROM 30 as address signals and a read-out signal is set in the register 31.

For instance, the contents of register 31 are cleared and at that moment when (P2) is inputted to the ROM 30 as an adress signal, a transition state S1 in the ROM 30 is outputted and stored in register 31. The same procedure is repeated until, for example, the final stage S5 is reached.

The output signal of the character recognizing circuit 13 and the character-frame discrimination circuit 25 are combined in a character-synthesizing circuit 26 for final recognition results. For instance, in the case of distinguishing "8" and "B" recognizing circuit 13 outputs the same results for these two patterns. The output signals from the circuit 25, however, are different, since the left-side half of the character-frame of "8" is " $\mathcal{E}$ " and the opposite half is shaped such as " $3$ ", while the left-side half of the pattern "B" is " $I$ " and the opposite-side half is " $3$ " , providing character-frames of "8" and "B" after synthesis of the two halves of the frames respectively. Thus the method of recognition of the figures/characters of the present invention enables to distinguish "8" from "B" or "K" from "X" by incorporating the additional functions of the frame discrimination circuit 25 and the character-synthesizing circuit 26 into an ordinary character-recognizing function represented by notations from 1 to 13.

The circuits 25 and 26 can be realized by utilizing the same kind of components such as a ROM and a register as shown in Fig. 5 with respect to circuit 23.

In the above described embodiment margins of binary character-pattern are detected for every line segment of the pattern. In practice, margins can be detected for every columns or for a plurality of lines and/or columns or their combinations.

Moreover it is possible to use the following methods to recognize patterns:

It is possible to combine left-half character margin and right-half character-frame, but in this case distinction between "M" and "N" becomes impractical, so that this possibility is suitable only in some specific cases.

Moreover it is possible to combine left and right halves plus top and bottom halves, but in general the bottom-half character-frame is unnecessary, so that the most practical way at present is to combine left and right-halves plus top character-frames.

By means of this it is possible to recognize all alphabetic and numeric patterns plus some specific patterns with high reliability.

Having described the invention in connection with certain specific embodiments thereof, it is to be understood that further modifications may now suggest themselves to those skilled in the art and it . is intended to cover such modifications as fall within the scope of the appended claims.

**Claims**

1. An apparatus for recognizing a character or figure by scanning with a hand-held scanner (1) comprising an image sensor (6) composed of a two-dimensional array of photoelectric elements, projection lamps (4), focusing lens (5) and using a binary circuit (7) for converting the output analog signals of the photoelectric elements into digital signals so that a binary pattern forms an image of the character scanned and by processing the binary pattern to identify the scanned character, determination means (9, 10) for a character area in the binary pattern of the character scanned through both vertical and horizontal segmentation of the binary pattern, character segment feature extraction means (11) in which the features of the segments of the character are extracted in terms of either line or column of the binary pattern to provide a feature code (Ci) for either line segment or column segment, partial character feature extracting means (12) in which the adjacent same feature codes (Ci) are represented by one single partial character feature code (Di); character determinations means (13) for a character determination by following a state of transition diagram according to the occurrence of the partial character feature code (Di) characterized by

character margin detection means (21, 22) for providing first (Pi) and second (Qi) output signals indicative of the location identification number of the photoelectric elements in the sensor array in which character margins either in a column or line segmentation of the binary pattern are detected;

partial character frame recognizing means (23, 24) in which the left-side half and the right-side half of the binary pattern are recognized respectively by following a diagram of state of transition (Si) according to the occurrence of the signals (Pi, Qi) of the character margin detection means (21, 22);

character frame discrimination means (25) to provide one single frame structure of the binary pattern through combining the two partial character frames which are recognized by the partial character frame recognizing means (23, 24); and

character identification means (26) in which the result of the character determination means (13) and of the character frame discrimination means (25) are processed so as to provide final character identification based on its binary pattern.

2. Apparatus according to claim 1, wherein each of the partial character frame recognition means (23, 24), comprises a read only memory (ROM) (30) and a register (31) in which with the timing of the first or second signals (Pi, Qi) from the character margin detection means (21, 22) the contents of the ROM (30) are read out with an address comprising either of said first or second signals (Pi, Qi) and the output signal of the register (31).

3. Method of recognizing a character or figure, comprising the steps of

scanning with a hand-held scanner (1),

converting output analog signals of photoelectric elements into digital signals, so that a binary pattern forms an image of the character scanned,

and processing the binary pattern to identify the scanned character including the steps of

determination of a character area in the binary pattern of the character scanned through both vertical and horizontal segmentation of the binary pattern,

extraction of either line or column feature of the segment of the character to provide a feature code (Ci) for either each line segment or column segment,

determination of a single partial character feature code (Di) which represents adjacent same feature codes (Ci)s,

character determination by following a state of transition diagram according to the occurence of the partial character feature code (Di),

detection of the margin of the character by providing first and second output signals (Pi, Qi) indicative of the location identification number of said photoelectric elements in a sensor array in which character margins either in a column or line segmentation of the binary pattern are detected,

recognizing a partial character frame by recognizing the left-side and the right-side half of the binary pattern, respectively, by following a diagram of state of transition (Si) according to the occurence of the signals (Pi, Qi) in the character margin detection step,

discrimination of a character frame for providing one single frame structure of the binary pattern through combining the two partial character frames which are recognized in the partial-character frame recognization step, and

character identification by processing the result of the character determination step and the character frame discrimination step so as to provide final character identification based on its binary pattern.

4. Method according to claim 3, wherein the signals (Pi, Qi) from said character margin detection step are representing those of the adjacent plurality of segments of the binary patterns.

5. Method according to claims 3 or 4, wherein character frames are recognized through both the line-segmentation and column-segmentation.

6. Method according to any one of claims 3 through 5, wherein left-half character margins of the pattern and right-half character frames of the pattern are recognized.

7. Method according to claim 6, wherein the left half of the pattern and the right half of the pattern are combined with the top half of the pattern and the bottom half of the pattern.

8. Method according to claim 6, wherein the left half of the pattern and the right half of the pattern are combined with top character frames.

**Patentansprüche**

1. Eine Vorrichtung zur Erkennung eines Zeichens oder einer Figur durch Abtastung mit einem Handscanner (1) mit einem Bildsensor (6), zusammengesetzt aus einem zweidimensionalen Gebiet von photoelektrischen Elementen, Projektionslampen (4), einer focussierenden Linse (5), und welcher einen binären Schaltkreis (7) verwendet zur Konvertierung der analogen Ausgangssignale der photoelektrischen Elemente in digitale Signale, so daß ein binäres Muster ein Bild formt von Zeichen, welches abgetastet und in das binäre Muster verarbeitet wurde, um das abgetastete Zeichen zu identifizieren, einer Berechnungsvorrichtung (9, 10) für ein Zeichengebiet in dem binären Muster des Zeichens, welches abgetastet ist durch beide vertikale und horizontale Segmentierungen des binären Musters, einer Zeichensegmentkennzeichenextrahierungsvorrichtung (11), in der die Kennzeichen der Segmente des Zeichens extrahiert sind in Termen von entweder Zeilen oder Spalten des binären Musters, zur Bereitstellung eines Kennzeichencodes (Ci) des Zeilensegmentes, bzw. des Spaltensegmentes, einer partiellen Zeichenkennzeichenexstraktionsvorrichtung (12), in der die benachbarten gemeinsamen Kennzeichencodes (Ci) repräsentiert werden durch einen einzigen partiellen Zeichenkennzeichencode (Di), einer Zeichenbestimmungsvorrichtung (13) zur Bestimmung eines Zeichens durch Folgen eines Zustandes des übersetzungsdiagramms gemäß dem Vorkommen des partiellen Zeichenkennzeichencodes (Di), gekennzeichnet durch

eine Zeichenranddetektionsvorrichtung (21, 22) zur Bereitstellung von ersten (Pi) und zweiten (Qi) Ausgangssignalen, welche die Platzidentifikationsnummern der photoelektrischen Elemente in dem Sensorgebiet anzeigen, in welchem die Zeichenränder entweder in Spalten oder in Zeilensegmentation des binären Musters detektiert werden;

eine partielle Zeichenrahmenerkennungsvorrichtung (23, 24) in welcher die linksseitige Hälfte und die rechtsseitige Hälfte des binären Musters erkannt wird jeweils durch Folgen eines Diagramms des Zustandes des übergangs (Si) gemäß dem Vorkommen der Signale (Pi, Qi) der Zeichenranddetektionsvorrichtung (21, 22);

einer Zeichenrahmendiskriminierungsvorrichtung (25) zur Bereitstellung einer einzigen Rahmenstruktur des binären Musters durch Kombination zweier partieller Zeichenrahmen, welche erkannt werden von der Zeichenrahmenerkennungsvorrichtung (23, 24); und

eine Zeichenidentifizierungsvorrichtung (26), in der das Ergebnis der Zeichenbestimmungsvorrichtung (13) und der Zeichenrahmendiskriminierungsvorrichtung (25) derart verarbeitet werden, um eine endgültige Zeichenidentifikation, basierend auf dem binären Muster, bereitzustellen.

2. Vorrichtung nach Anspruch 1, wobei jede der partiellen Zeichenrahmenerkennungsvorrichtungen (23, 24) einen ROM (Read only Memory) (30) und ein Register (31) aufweist, in welches mit der Ablaufsteuerung der ersten und zweiten Signale (Pi, Qi) von den Zeichenranddetektionsvorrichtungen (21, 22) der Inhalt des ROM (30) herausgelesen wird mit einer Adresse, der ersten oder zweiten Signale (Pi, Qi) und des Ausgangssignals des Registers (31).

3. Verfahren zur Erkennung eines Zeichens oder einer Figur, welches folgende Schritte aufweist:

Abtasten mit einem Handscanner (1),

Konvertierung des analogen Ausgangssignals von photoelektrischen Elementen in digitale Signale, so daß ein binäres Muster ein Bild des abgetasteten Zeichens formt,

und das Verarbeiten des binären Musters zur Identifizierung des abgetasteten Zeichens, welches die Schritte aufweist des

Bestimmens eines Zeichengebietes in dem binären Muster des Zeichens, abgetastet durch

EP 0 144 006 B1

sowohl vertikale als auch horizontale Segmentierung des binären Musters,

der Extraktion entweder eines Zeilen- oder eines Spaltenkennzeichens des Segmentes des Zeichens zur Bereitstellung eines Kennzeichencodes (Ci) für entweder jedes Zeilensegment oder Spaltensegment,

des Bestimmens von einem einzigen partiellen Zeichenkennzeichencode (Di), welcher dieselben benachbarten Kennzeichencodes (Ci) repräsentiert,

der Zeichenbestimmung durch Folgen eines Zustandes des übergangsdiagramms gemäß dem Vorkommen des partiellen Zeichenkennzeichencodes (Di),

der Detektion des Randes des Zeichens durch Bereitstellung von ersten und zweiten Ausgangssignalen (Pi, Qi), welche die Platzidentifikationsnummern der photoelektrischen Elemente in einem Sensorgebiet anzeigen, in welchem die Zeichenränder entweder in Spalten oder in Zeilensegmentation des binären Musters detektiert werden,

der Erkennung eines partiellen Zeichenrahmens durch Erkennung der linksseitigen, bzw. der rechtsseitigen Hälfte des binären Musters durch Folgen eines Diagramms des Zustands des übergangs (Si) gemäß dem Vorkommen der Signale (Pi, Qi) in dem Schritt der Zeichenranddetektion,

der Diskriminierung eines Zeichenrahmens zur Bereitstellung einer einzigen Rahmenstruktur des binären Musters durch Kombination der zwei partiellen Zeichenrahmen, welche erkannt wurden in dem Schritt der partiellen Zeichenrahmenerkennung, und

der Zeichenidentifizierung durch Verarbeitung des Resultats des Schrittes der Zeichebestimmung und des Schrittes der Zeichenrahmendiskriminierung derart, um die entgültige Zeichenidentifikation bereitzustellen, basierend auf ihrem binären Muster.

4. Verfahren nach Anspruch 3, wobei die Signale (Pi, Qi) von dem Schritt der Zeichenranddetektion jene der benachbarten Mehrzahl der Segmente der binären Muster repräsentieren.

5. Verfahren nach den Ansprüchen 3 oder 4, wobei die Zeichenrahmen erkannt werden durch sowohl die Zeilensegmentation als auch durch die Spaltensegmentation.

6. Verfahren nach einem der Ansprüche 3 bis 5, wobei die linke Hälfte der Zeichenränder des Musters und die rechte Hälfte der Zeichenrahmen des Musters erkannt werden.

7. Verfahren nach Anspruch 6, wobei die linke Hälfte des Musters und die rechte Hälfte des Musters kombiniert werden mit der oberen Hälfte des Musters und der unteren Hälfte des Musters.

8. Verfahren nach Anspruch 6, wobei die linke Hälfte des Musters und die rechte Hälfte des Musters kombiniert werden mit den oberen Zeichenrahmen.

**Revendications**

1. Dispositif pour reconnaître un caractère ou une figure par balayage au moyen d'un dispositif de balayage (1) tenu à la main, comportant un capteur d'image (6) composé d'une batterie bidimensionnelle d'éléments photoélectriques, des lampes de projection (4), une lentille de concentration (5) et faisant appel à un circuit binaire (7) pour convertir les signaux analogiques émis par les éléments photoélectriques dans des signaux digitaux de sorte qu'une structure binaire forme une image du caractère balayé et que par le traitement de la structure binaire le caractère balayé est identifié,

des moyens de détermination (9, 10) pour une zone du caractère dans la structure binaire du caractère balayé par la segmentation à la fois verticale et horizontale de la structure binaire, des moyens d'extraction (11) de caractéristiques de segment de caractère dans lesquels les caractéristiques des segments de caractère sont extraites, soit sous forme de ligne, soit sous forme de colonne de la structure binaire, pour fournir un code caractéristique (Ci), soit pour le segment en ligne, soit pour le segment en colonne, des moyens d'extraction (12) de caractéristiques partielles de caractère dans lesquels les mêmes codes caractéristiques (Ci) adjacents sont représentés par un seul code caractéristique partiel du caractère (Di); des moyens de détermination (13) de caractère pour la détermination de caractère en suivant un diagramme d'état de transition selon l'apparition du code caractéristique partiel du caractère (Di) caractérisé en ce que

des moyens de détection des marges de caractère (21, 22) pour fournir des premier et second (Qi) signaux de sortie indiquant le numéro d'identification de la localisation des éléments photoélectriques dans la batterie de capteurs, dans lesquels les marges de caractère sont détectés, soit dans une segmentation en colonne, soit dans une segmentation en ligne de la structure binaire;

des moyens de reconnaissance (23, 24) du cadre partiel du caractère dans lesquels la moitié gauche et la moitié droite de la structure binaire sont reconnues suivant un diagramme d'état de transition (Si) selon l'apparition des signaux (Pi, Qi) des moyens de détection de la marge du caractère (21, 22);

des moyens de discrimination (25) du cadre de caractère pour fournir une seule structure de cadre de la structure binaire par la combinaison des deux cadres partiels de caractère qui sont reconnus par les moyens de reconnaissance du cadre partiel du caractère (23, 24); et

des moyens d'identification des caractères (26) dans lesquels le résultat des moyens de détermination (13) du caractère et les moyens de discrimination (25) du cadre de caractère sont traités de manière à fournir une identification de caractère finale se fondant sur la structure binaire de celui-ci.

2. Dispositif selon la revendication 1, dans lequel chacun des moyens de reconnaissance du cadre partiel du caractère (23, 24) comporte une mémoire "read only" (ROM) (30) et un registre (31) dans lequel la succession dans le temps des premier ou second signaux (Pi, Qi) émis par les moyens de détection (21, 22) de la marge de caractère et le contenu du ROM (30) sont lus avec une adresse comportant, soit le premier, soit le second signal (Pi, Qi) et le signal de sortie du registre (31).

3. Méthode pour reconnaître un caractère ou une figure comportant les étapes de balayage avec un dispositif de balayage tenu à la main (1),

la conversion de signaux analogiques émis par des éléments photoélectriques en signaux digitaux de sorte qu'une structure binaire forme une image du caractère balayé,

et le traitement de la structure binaire pour identifier le caractère balayé comportant les étapes de

la détermination de la zone de caractère dans la structure binaire du caractère balayé par la segmentation aussi bien verticale qu'horizontale de la structure binaire,

l'extraction d'une caractéristique soit en ligne soit en colonne du segment de caractère pour fournir un code caractéristique (Ci), soit du segment en ligne, soit du segment en colonne,

la détermination d'un seul code caractéristique partiel du caractère qui représente des codes caractéristiques (Ci) identiques adjacents,

la détermination du caractère suivant un diagramme d'état de transition selon l'apparition du code caractéristique partiel (Di) du caractère,

la détection de la marge du caractère en fournissant des premier et second signaux de sortie (Pi, Qi) indiquant le numéro d'identification de la localisation desdits éléments photoélectriques dans une batterie de capteurs dans laquelle les marges de caractère sont détectées dans une segmentation, soit en colonne, soit en ligne de la structure binaire,

la reconnaissance d'un cadre partiel de caractère par la reconnaissance de la moitié gauche et de la moitié droite de la structure binaire suivant un diagramme d'état de transition (Si) selon l'apparition des signaux (Pi, Qi) dans l'étape de détection de la marge du caractère,

la discrimination d'un cadre de caractère pour fournir une structure unique de cadre de la structure binaire par la combinaison des deux cadres de caractères partiels qui sont reconnus dans l'étape de reconnaissance des cadres partiels de caractère, et

l'identification des caractères par le traitement des résultats de l'étape de détermination du caractère et l'étape de discrimination du cadre de caractère de sorte à fournir une identification de caractère finale se fondant sur la structure binaire de celui-ci.

4. Méthode selon la revendication 3, dans laquelle les signaux (Pi, Qi) de ladite étape de détection de la marge de caractère représentent ceux de la pluralité de segments adjacents de la structure binaire.

5. Méthode selon les revendications 3 ou 4, dans laquelle les cadres de caractère sont reconnus par toutes les deux segmentations, en ligne et en colonne.

6. Méthode selon l'une quelconque des revendications 3 à 5, dans laquelle les marges de la moitié gauche des caractères de la structure et les cadres de la moitié droite des caractères de la structure sont reconnus.

7. Méthode selon la revendication 6, dans laquelle la moitié gauche de la structure et la moitié droite de la structure sont combinées avec la moitié supérieure de la structure et la moitié inférieure de la structure.

8. Méthode selon la revendication 6, dans laquelle la moitié gauche de la structure et la moitié droite de la structure sont combinées avec les cadres de caractère supérieurs.

# FIG. 1

# FIG.2

FIG. 3

# FIG.4

# FIG.5